Europäisches Patentamt

(19) European Patent Office

Office européen des brevets

(11) **EP 0 572 858 B1**

(12) **EUROPEAN PATENT SPECIFICATION**

(45) Date of publication and mention
of the grant of the patent:
**13.02.2002 Bulletin 2002/07**

(51) Int Cl.$^7$: **H04B 7/08**, H04L 1/06

(21) Application number: **93108065.9**

(22) Date of filing: **18.05.1993**

(54) **Method for minimizing the IF-estimated bit error rate function in a space/angle diversity digital radio receiver**

Verfahren zur Minimierung der ZF-geschätzten Bitfehlerratefunktion in einem digitalen Raum/Winkeldiversity-Funkempfänger

Méthode pour la minimalisation de taux d'erreurs de bits estimé à fréquence intermédiaire dans un récepteur radio numérique en diversité d'espace/angle

(84) Designated Contracting States:
**CH DE ES FR GB LI NL SE**

(30) Priority: **25.05.1992 IT MI921271**

(43) Date of publication of application:
**08.12.1993 Bulletin 1993/49**

(73) Proprietor: **ALCATEL**
**75008 Paris (FR)**

(72) Inventors:
• **Conti, Adelio**
**I-20050 Montevecchia (CO) (IT)**
• **Nobili, Rocco**
**I-20060 Cassina De'Pecchi (MI) (IT)**
• **Troyer, Paolo**
**I-20099 Sesto S. Giovanni (MI) (IT)**

(74) Representative: **Colombo, Stefano Paolo et al**
**Alcatel, Intellectual Property Department,**
**Vimercate, Via Trento, 30**
**20059 Vimercate (MI) (IT)**

(56) References cited:
**EP-A- 0 333 167**     **EP-A- 0 477 158**
**WO-A-81/00333**     **US-A- 4 512 034**

• **COMMUTATION ET TRANSMISSION vol. 13, no. 3, October 1991, PARIS FR pages 61 - 76 O.DE LUCA & B.HURINVILLE 'NEW GENERATION 140 AND 155 Mbit/s DIGITAL MICROWAVE SYSTEM'**
• **PROCEEDINGS OF 22nd EUROPEAN MICROWAVE CONFERENCE 24-27 August 1992, TUNBRIDGE WELLS (UK) volume 2, pages 1143-1148; U.CASIRAGHI ET AL.: "MiBS IF COMBINER FOR SPACE AND ANGLE DIVERSITY IN DIGITAL RADIO: FIRST TRIAL RESULTS"**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 572 858 B1

## Description

The present invention relates to a method of processing and optimizing the IF analog BER (Bit Error Rate) function in a space/angle diversity digital radio transmission system according to claim 1.

EP-A-0 333 167 discloses a space diversity receiver in which power and distortion are used to calculate an error term and the relative phase is varied during an initial attempt to minimize that error term, when a local minimum of such error term has been reached, rather than continue to search for an optimum phase corresponding to an absolute minimum of the error function, the phase is fixed and the attenuation is varied. Further, the measurements in EP-A-0 333 167 are at baseband.

In US-A-4 512 034 reference is made a dispersion measurement obtained through a IF (Intermediate Frequency) selective filters and a power value. The combining algorithm according to the US patent is driven by the dispersion measurement with the received field being sufficiently wide, while the combination is obtained by maximum power algorithm when the field is close to the threshold.

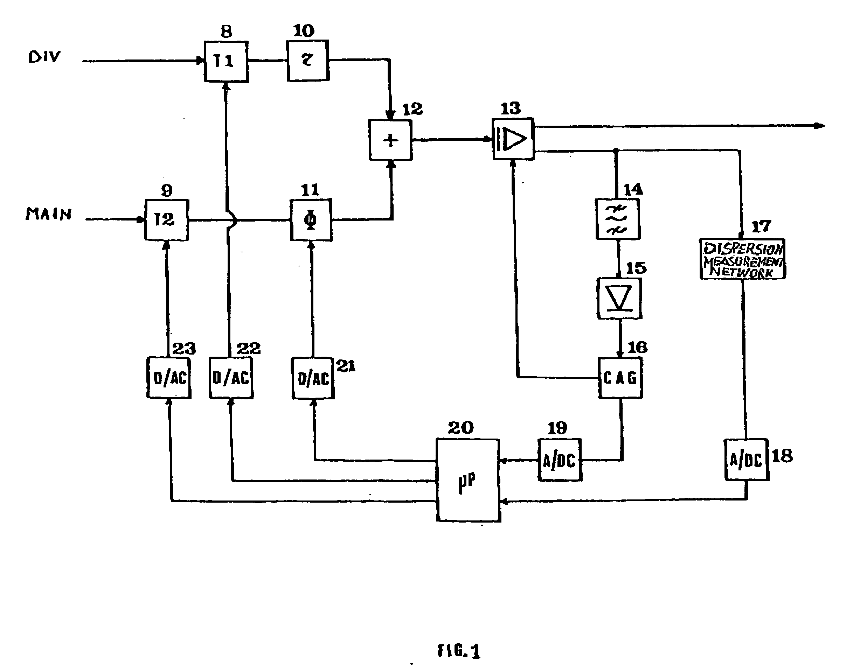

In Italian Patent IT 1227559 of TELETTRA S. p.A. (the old name of the Applicant) there is described a system for combining at least two signals which are received in condition of diversity, in particular spatial and/or angular diversity; in its fig. 1 the generalised schematic of such a combination system whose detailed description is provided by the above-mentioned patent is shown.

In such a system it is proposed to optimize an intermediate-frequency estimated BER function in order to handle the operation of a minimum-BER combiner.

The intermediate frequency estimated BER function is called "analog BER" and is given by the formula:

$$BER = 10^{\alpha P + \beta} + 10^{\gamma D + \delta} \qquad (1)$$

In this formula P and D are the measures of power and dispersion of the combined signal, while the values of coefficients $\alpha$, $\beta$, $\gamma$, $\delta$ depend on the type of modulator-demodulator employed.

It is possible to re-express equation (1) in the form:

$$BER = A * Rag(P) + B * Ban(D) \qquad (2)$$

where:

Rag(P)= $10^{\alpha P}$
Ban(D)= $10^{\gamma D}$
A = $10^{\beta}$
B = $10^{\delta}$

The function Rag (P) represents the power of the recombined data spectrum, Ban (D) represents the dispersion of said spectrum.

Nevertheless power and dispersion depend on the recombination phase $\phi$ and the attenuation value introduced on the two channels by attenuators T1 and T2.

Therefore the analog BER function can be expressed through the following symbols:

$$BER (\phi, T1, T2)$$

Indeed the analog BER function is not only dependent on $\phi$, T1, T2 but depends also on the two input signals being applied to the combiner.

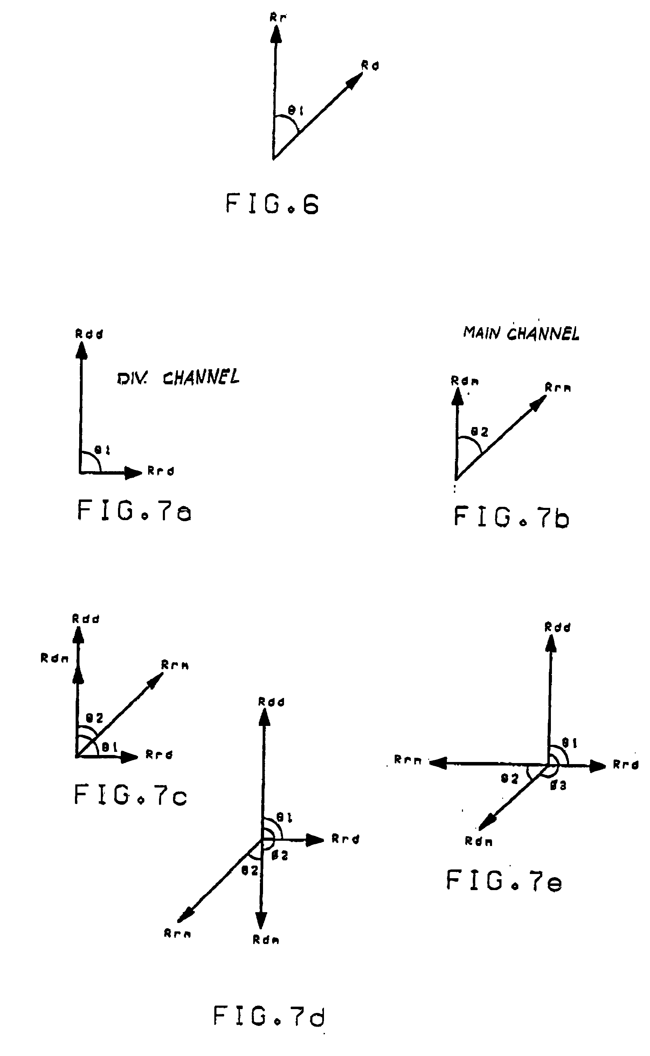

The channel that both phase shifts and attenuates the signal upstream of the summing node is designed MAIN and the channel that only attenuates upstream of the node is designed DIV (fig. 6 of the above Italian Patent 1,227,559 herein reproduced as fig. 1).

In this figure the references indicate respectively:

MAIN: channel that phase-shifts and attenuates the signal upstream of the summing node.
DIV: channel that attenuates upstream of the summing node.
8: driven attenuator T1
9: driven attenuator T2
10: delay line
11: driven phase shift
12: summing node
13: IF amplifier
14: power detection filter
15: detector
16: automatic gain control
17: dispersion measurement network
18 and 19: A/D converter
20: microprocessor
21,22,23: D/A converter

Assuming a dispersion on the MAIN channel, characterized by an echo delay $\tau$, a notch depth $B_{cm}$ and a notch frequency position $F_{nm}$; assuming that also DIV channel has dispersions characterized by an echo delay $\tau$, a notch depth $B_{cd}$ and notch frequency position $F_{nd}$; in correspondence with these parameters which define the activity of the selective fading present on the MAIN and on the DIV channels one will obtain a first BER function, $BER_1 (\phi, T1, T2)$.

Through the change of the parameters of the selective fading present on the two input channels, a $BER_n(\phi, T1, T2)$ different from $BER_1 (\phi, T1, T2)$ will be obtained.

Therefore it will be possible to define countless $BER_n (\phi, T1, T2)$'s corresponding to the countless selective fading conditions, different to each other.

Setting T1 = T2 equal to the nominal attenua-

tion value ($T1_n$ indicates the nominal value of T1 and $T2_n$ indicates the nominal value of T2) results in the function:

$$BER_n(\phi) = A * Rag_n(\phi) + B * Ban_n(\phi) \qquad (3)$$

For optimizing $BER_n(\phi)$ a more or less developed method of the gradient (gradient search technique) would be sufficient to relocate the point of minimum, should such a function not include some particularities, i.e. is reasonably smooth.

One of the difficulties related to the optimisation of $BER_n(\phi)$ is determined by the fact that in searching the point of optimum for some $BER_n(\phi)$'s the following situation may occur:

$$BER_n(\phi) = \text{constant for } \phi_0 < \phi < \phi_1$$

In such a phase interval the $BER_n(\phi)$ function has a minimum.

The phase shift present on the MAIN channel nevertheless must be always kept in motion in order to be able to carry out as quickly as possible the variation of the parameters of the selective fading present on the two channels.

This usually results in a very restricted phase oscillation in the neighbourhood of the well-defined phase value which maintains $BER_n(\phi)$ at a minimum without significantly degrading the combined signal data spectrum, on the other hand.

In the case in question, all the phase values for which $BER_n(\phi)$ = constant minimise the function, wherein a large excursion of $\phi$ with BER = constant will occur.

Varying the phase with BER = constant may result in variations in dispersion and power of the recombined signal which can be remarkable.

This situation occurs because in areas where $BER_n(\phi)$ = constant, a variation in the dispersion measure $Ban_n(\phi)$ would result in a variation in the power measure $Rag_n(\phi)$ provided that:

$$BER_n(\phi) = B * Ban_n(\phi) + A * Rag_n(\phi) \cong \text{constant}$$

The problem is not so small because such a situation may result in an oscillation of the recombined signal data spectrum.

These are situations in which the $BER_n(\phi)$ is not suitable to provide indications about the best combination phase, in which it is necessary to individuate a function to be optimized for the purpose of realising the best possible radio link until $BER_n(\phi)$ is suitable to provide useful indications.

It is a first object of the present invention to provide a method of processing and optimizing the analog BER (Bit Error Rate) function in a spatial and/or angular diversity digital transmission system, in particular according to the Italian Patent IT 1227559.

The method according to the invention is now characterized in that the radio link is optimized by searching for a minimum of the analog BER function ($BER_n(\phi)$); analysing said minimum for individuating if it is a relative minimum which is detrimental to the link; and continuing the search up to reaching the absolute minimum that corresponds with certainty to the best condition for the link itself.

According to one aspect of the invention, when searching the minimum and before finding it, a situation occurs in which the BER value does not change significantly as the combination phase $\phi$ varies and hence does not allow to obtain the best radio link, one goes on analysing the variation, as a function of $\phi$, of at least an alternate $BER_n(\phi)$ obtained according to the formula (3):

$$BER_n(\phi) = A * Rag_n(\phi) + B * Ban_n(\phi) \qquad (3)$$

defined above.

In the various figures of the annexed sheets of drawings:

- Fig. 1 is a generalised schematic of a prior art combination system and corresponds to Fig. 6 of Italian Patent 1,227,559;
- Fig. 2 shows a function to be optimized where the dispersion minimum Md is well defined while the $BER_n(\phi)$ is almost constant also for some tens degrees;
- Fig. 3a shows a function to be optimized, $BER2_n(\phi)$, for which the power has a weight higher than dispersion and in which before observing a variation of the power it is necessary to vary the phase by several degrees;
- Fig. 3b shows a $BER_n(\phi)$ which has both a relative minimum and an absolute minimum;
- Fig. 4 is a block diagram of an optimisation function that in most cases will be equal to $BER_n(\phi)$ but in some instances will be equal to $BER1_n(\phi)$ or to $BER2_n(\phi)$;
- Fig. 5 is another block diagram showing how an absolute minimum is identified;
- Fig. 6 is a simplified vectorial representation of a radio transmissive channel showing how a direct ray and a reflected ray may interact to provide selective fading;
- Fig. 7a shows the direct and reflected rays received on one channel;
- Fig. 7b shows the direct and reflected rays received on another channel;
- Fig. 7c shows a first recombination phase maximising the power;
- Fig. 7d shows a second recombination phase min-

- Fig. 7e shows a third recombination phase also minimising dispersion;
- Fig. 8 is a block diagram for checking whether a relative minimum is an absolute minimum; and
- Fig. 9 shows the use of a signature measurement to evaluate whether the channels have been combined in an optimum manner.

Let $BERK_n(\phi)$ be the function that is obtained by weighing in a different manner the dispersion and power in equation (3); such a function gives higher weight to dispersion or to power as the values of multiplicative coefficients A and B are varied.

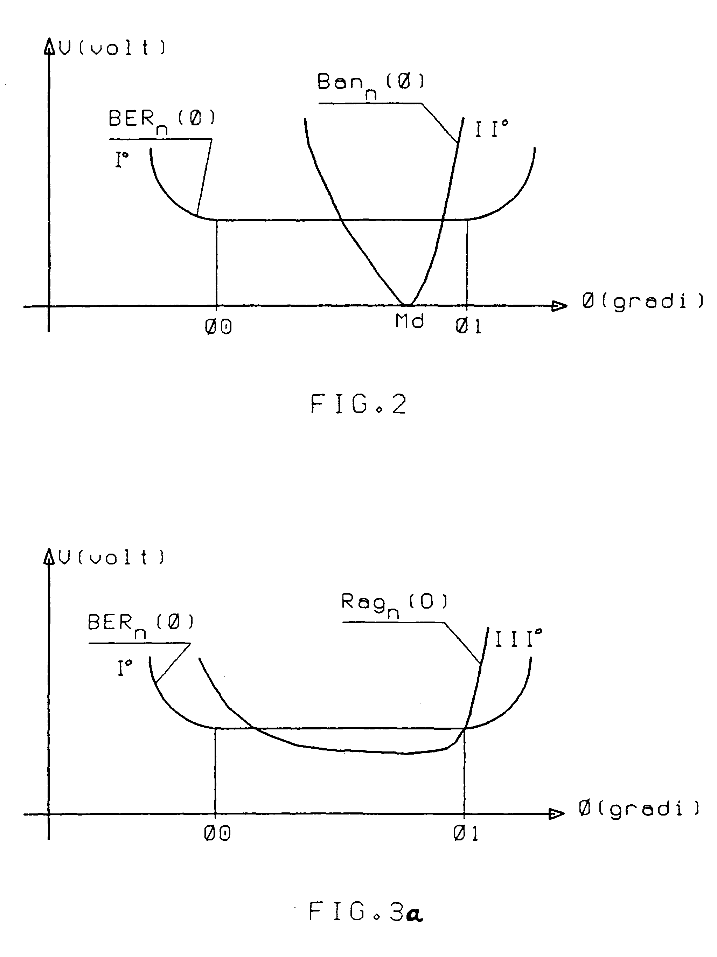

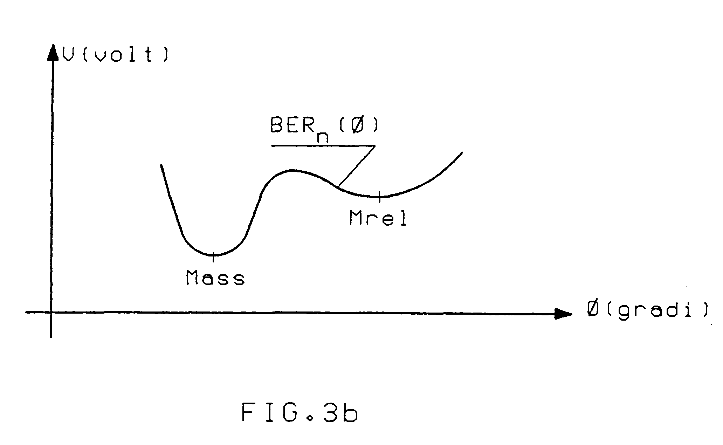

Therefore it is necessary to determine with certainty in what cases, with $BER_n(\phi)$ being constant (curve I° in Figs. 2 and 3), the function to be optimized will be $BER1_n(\phi)$ in which $Ban_n(\phi)$ will have a weight greater than $Rag_n(\phi)$, and in what cases it will be $BER2_n(\phi)$ in which $Rag_n(\phi)$ has a weight greater than $Ban_n(\phi)$.

In cases where the function to be optimized is a $BER1_n(\phi)$, the situation will be similar to the one shown in fig 2, from which it is noted that the dispersion minimum Md of the function $Ban_n(\phi)$ (curve II) is well defined and it is sufficient to stray few degrees to go away from it, while $BER_n(\phi)$ is almost constant also for some tens degrees.

In order to individuate such a situation with certainty, it is necessary that at least the following conditions occur:

1. By moving the phase shift some degrees in the same direction (i.e. shifting the phase n1 times in the same direction) will result in the dispersion $Ban_n(\phi)$ being subjected to a variation exceeding a certain value, while $BER_n(\phi)$ does not vary much (let Difb be this minimum variation of $BER_n(\phi)$).

2. The variation of the dispersion of the recombined data spectrum will increase once arrived at the point of optimum dispersion, even though $BER_n(\phi)$ is nearly constant; in practice referring to fig 2 one must have passed through the minimum dispersion point (Md) before starting to optimize the function $BER1_n(\phi)$.

In cases when the function to be optimized is a $BER2_n(\phi)$ in which the power $Rag_n(\phi)$ has a weight higher than $Ban_n(\phi)$ there will be a situation like that of Fig. 3a, in which it can be seen that before observing a variation of the power $BERn(\phi)Rag_n(\phi)$ (curve III°) in the region where $BER_n(\phi)$ does not vary much (let Difr be this minimum variation of $BER_n(\phi)$) it is necessary to move $\phi$ by several degrees (i.e. shifting the phase n2 times in the same direction, n1 << n2).

Moreover it is necessary to add that in such cases one does not pass through a zero dispersion point, so that it is true that by varying the phase both power and dispersion will vary too, but it is also true that the absolute dispersion values under consideration will be always high.

In both cases anyway, as soon as $BER_n(\phi)$ begins varying again as $\phi$ varies, e.g. because the notches present on the two channels have moved away in frequency, one begins optimizing again such a function.

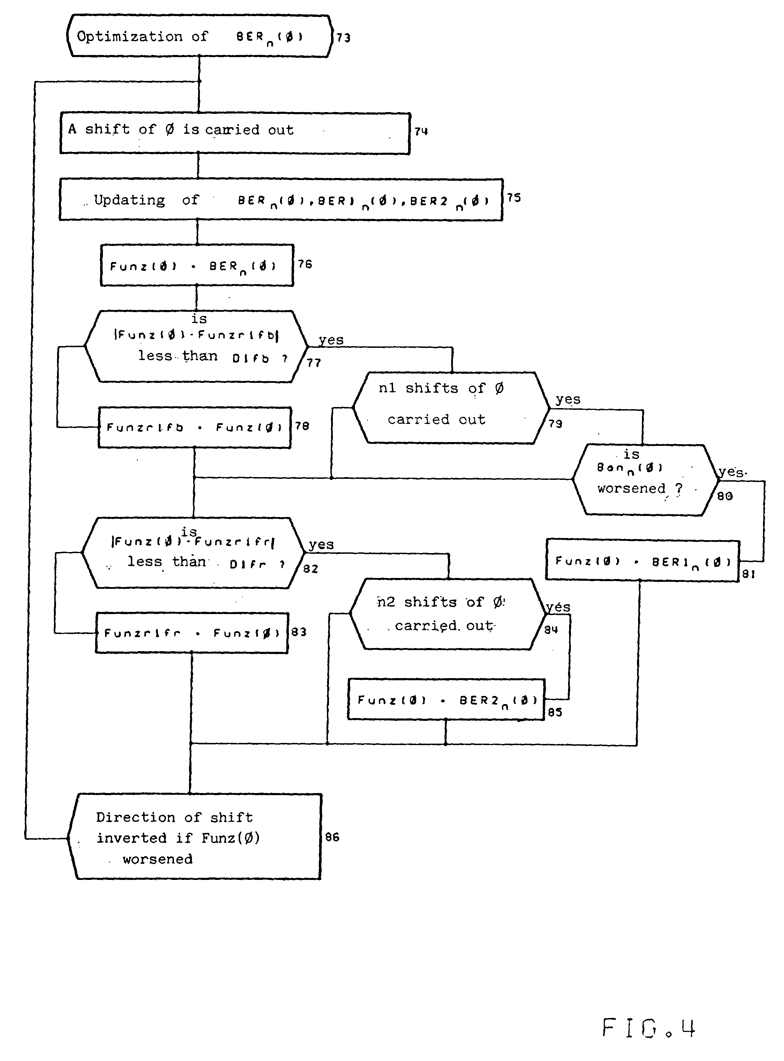

The search of the best combination phase so entails the optimisation of a function, which can be designed as Funz $(\phi)$, that in most of the cases will be equal to $BER_n(\phi)$ but that in some particular instances will be equal to $BER1_n(\phi)$ or to $BER2_n(\phi)$ (block diagram of fig 4).

In this figure the following blocks are shown:

73: describes the function of blocks of fig 4.

74: handles the variations of phase $\phi$.

75: calculates values of $BER_n(\phi)$, $BER1_n(\phi)$, $BER2_n(\phi)$ after the phase variation.

76: assigns the present value of $BER_n(\phi)$ to Funz $(\phi)$.

77: evaluates if the absolute value of the difference between the actual value of Funz $(\phi)$ and the reference value Funzrifb is less than any small quantity Difb.

78: assigns the present value of Funz $(\phi)$ to the reference value Funzrifb.

79: evaluates whether the test of block 77 has been successful n1 consecutive times.

80: evaluates whether having the situation described by block 79 occurred, $Ban_n(\phi)$ has worsened during the n1 consecutive shifts of phase $\phi$.

81: assigns the present value of $BER1_n(\phi)$ to Funz $(\phi)$.

82: evaluates whether the absolute value of the difference between the present value of Funz $(\phi)$ and the reference value Funzrifr is less than any small quantity Difr.

83: assigns the present value of Funz $(\phi)$ to reference value Funzrifr.

84: evaluates whether the test of block 82 has been successful n2 consecutive times.

85: assigns the present value of $BER2_n(\phi)$ to Funz $(\phi)$

86: evaluates whether after the phase shift Funz $(\phi)$ is worsened and, in the affirmative, it inverts the shifting direction of phase $(\phi)$.

Another difficulty arising during optimisation of $BER_n(\phi)$ function, is determined by the fact that generally this function does not have only one minimum but has at least a relative minimum $M_{re1}$ and an absolute minimum Mass (Fig. 3b).

The points of minimum are not equivalent; in fact there are $BER_n(\phi)$'s that have points of relative minimum which may determine an "out of order" of the radio link, while the absolute minimum is a point for which the link does not degrade.

It is therefore necessary to develop a method that allows, once the point of minimum for $BER_n(\phi)$ has been reached, to recognise if such minimum is a relative minimum detrimental for the radio link, and which allows, moreover, to reach the absolute minimum.

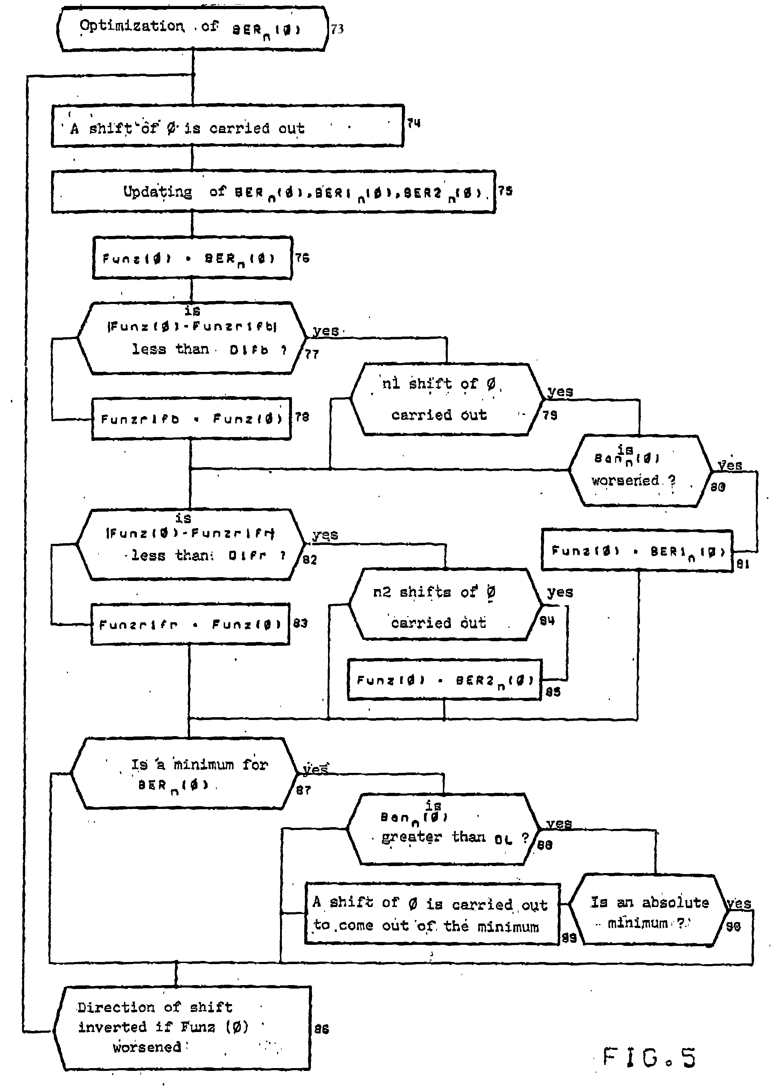

Fig 5 shows the block diagram of fig 4, relative to the method for reaching the optimum of phase $\phi$ for combination purposes, integrated by blocks which represent the processes to which the recombined data spectrum is to be subjected in order to be able to state whether or not an absolute minimum has been individuated.

As can be seen in fig 5, the following blocks are to be added to blocks 73 to 86 of fig 4:

> 87: evaluates whether the reached point of phase $\phi$ minimises $BER_n(\phi)$
> 88: checks if the dispersion of the combined data spectrum is greater than value DL after having reached the phase value that minimises $BER_n(\phi)$.
> 90: checks if the point of minimum is an absolute minimum.

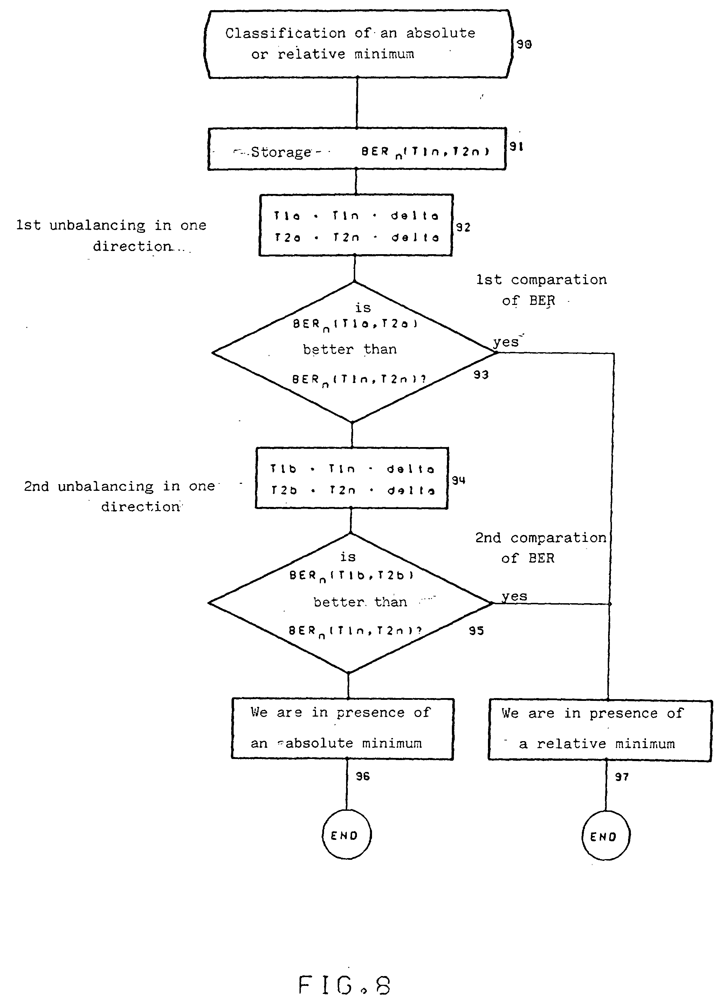

The block diagram for carrying out such a check is shown in fig 8.

> 89: carries out a phase $\phi$ shift sufficient to pass over the point of relative minimum.

If the known vectorial representation of the radio transmissive channel affected by selective fading (reduced three-ray model) is used, two vectors, one representing the direct ray Rd and the other representing the reflected ray Rr, are obtained (fig 6).

The reflected ray Rr assumes different phase shifts $\theta i$ with respect to the direct ray Rd depending on the position in frequency of the selective notch (Nse).

Also when in presence of a combiner which receives two signals in difference of space and/or angle condition, the received signals can be characterized in terms of vectors: in figs 7a and 7b there are illustrated the direct ray Rdd received on DIV channel, respectively the direct ray Rdm received on MAIN channel, and the respective reflected rays Rrd and Rrm.

The absolute value and phase shift of each of the reflected rays Rrd and Rrm of the two channels, relative to the corresponding direct ray, characterize the dispersion due to the selective fading typical of the two received signals.

Inspection of figures 7c to 7e shows that exist at least three recombination phases $\phi1$, $\phi2$, $\phi3$: one that maximises the power (fig 7c, $\phi1 = 0$) and two minimising dispersion at the expense of the recombined signal power (figs 7d and 7e).

The recombination phase, obtained by optimizing $BER_n(\phi)$, generally is a phase that averages out between the minimum dispersion and the maximum power.

However there are some $BER_n(\phi)$'s for which the recombination points at minimum dispersion and at maximum power are minima not equivalent for radio linkage purposes.

Some typical cases are those in which for both channels there is a selective fading with a notch coinciding with or close to the band-centre frequency of the data spectrum in transmission; in such case the minimum dispersion recombination points practically coincide.

For such $BER_n(\phi)$'s it is necessary to individuate a criterium which allows to carry out the following two operations:

> 1 - Individuating a relative minimum detrimental for radio linkage purposes, which is able to make the system out of order.
> 2 - Positioning on the absolute minimum which allows to optimize the radio link.

A relative minimum of $BER_n(\phi)$ detrimental for linkage purposes that coincides with the minimum dispersion recombination point can be individuated by reading the power of the recombined data spectrum.

The case in which the relative minimum of $BER_n(\phi)$ detrimental for linkage purposes coincides with the recombination point that maximises the power is more difficult to evaluate.

First of all it is necessary to establish if the reached phase is the one that minimises $BER_n(\phi)$; such a phase will be surely reached after a certain of the phase shifter displacements: in fact convergence to a minimum is certainly fast and it does not have any difficulty.

Once reached the phase that minimises $BER_n(\phi)$, the. phase shifter will move in the neighbourhood of such phase locking itself to the same minimum.

Therefore it is sufficient to check that a certain number (ns) of displacements in the neighborhood of a certain phase value has been carried out, to assert that a point of minimum for $BER_n(\phi)$ has been individuated; moreover, if the data spectrum dispersion is greater than a certain value DL (88) the Individuated minimum is one that maximises the power (fig.5).

But it is not sufficient to check that a dispersion of the recombined data occurs to be in a position to assert that there is a better minimum for combination purposes, since for some $BER_n(\phi)$'s the minimum that maximise the power is the absolute minimum.

It is necessary to check if there are conditions to be able to assert that there is a better minimum for combination purposes.

Such conditions occur when the depths $B_c$ of notches present on the two channels is considerably different, such as to allow a recombination that favours the minimum dispersion.

The following procedure has been developed to determine the existence of the above-described conditions (fig 8):

1 - Attenuators are unbalanced in one direction, T1 with an attenuation value that exceeds by a certain amount "delta" the attenuation nominal value ($T1_a = T1_n + delta$) and T2 with a lower value ($T2_a = T2_n - delta$) (92); then they are unbalanced in the opposite direction in which T1 has a value lower than the attenuation nominal value by a certain amount "delta" and T2 with a higher value (94).

2 - It is checked that in the unbalance of the attenuators, in one direction or another, an improvement of the analog BER (93, 95) has been detected, such as to be able to assert the presence of two channels having the depths $B_c$ of the two notches considerably different in order to obtain a better recombination.

Still in accordance with the invention, if such an improvement is detected, one can assert that there is a relative minimum (97), otherwise the minimum is absolute (96) for $BER_n$ ($\phi$).

In fig 8 the following blocks are shown:

90: describes the function carried out by blocks of fig 8.

91: stores the value of the minimum of $BER_n$ ($\phi$, T1, T2) obtained by optimizing the phase with attenuators T1, T2 equal to respective nominal values $T1_n$, $T2_n$.

92: unbalances in one direction the attenuation level of the two channels; the attenuation values after such unbalance will be

$$T1_a = T1_n + delta$$

and

$$T2_a = T2_n - delta.$$

93: compares the value of $BER_n$ ($T1_n$, $T2_n$) stored in block 91 with the value of $BER_n$ ($T1_a$, $T2_a$) obtained by carrying out the unbalance of block 92 to check if an improvement of $BER_n$ (T1, T2) has occurred.

94: unbalances the attenuation level of the two channels in a direction opposite to the one of block 92; the attenuation values after such unbalance will be

$$T1_b = T1_n - delta \text{ and } T2_b = T2_n + delta$$

95: compares the values of $BER_n$ ($T1_n$, $T2_n$) stored in block 91 with the value of $BER_n$ ($T1_b$, $T2_b$) obtained by carrying out the unbalance of block 94 in order to check if an improvement of $BER_n$ (T1, T2) has occurred.

96: one arrives at this block only if both tests of blocks 93 and 95 have not been successful and therefore it can be asserted that the minimum individuated for $BER_n$ ($\phi$) is an absolute minimum.

97: one arrives at this block only if at least one of the tests of blocks 93, 95 has been successful and hence it can be asserted that the minimum individuated for $BER_n$ ($\phi$) is a relative minimum.

In both the examined cases, once it has been determined that one is in a relative minimum of $BER_n$ ($\phi$) detrimental for the radio link, it can but shift the phase (89) in such a way that it is possible to converge to absolute minimum of $BER_n$ ($\phi$) (fig 5).

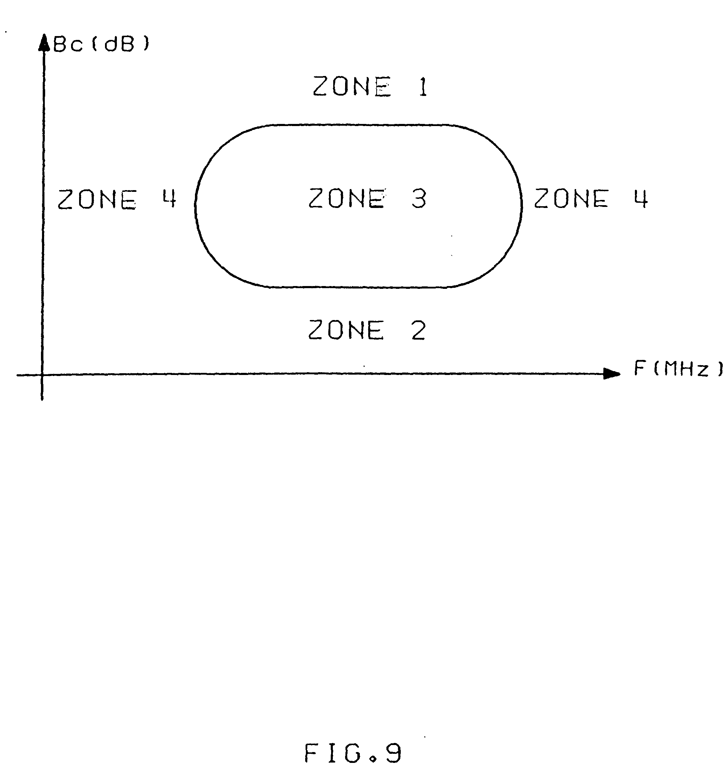

A typical application of the above-described method of individuating the relative minima of $BER_n$ ($\phi$) and particularly those maximising the power consists of the following type of signature (fig 9), measurement which generally is performed on a radio system not protected by difference of space and/or angle in order to evaluate its susceptibility to the selective fading.

It is assumed to carry out the signature measurement for the system in difference of space and/or angle which uses a minimum BER combiner using the following protocol:

1 - It is assumed to subject a channel to a fading at the frequency of the radio carrier and with a notch depth such as to determine a high error rate, e.g. 10 E-6, 10 E-5, if the system were not protected against the selective fading through the diversity.

2 The parameters of the selective fading are varied on the other channel both as to position in frequency and to notch depth $B_c$ in order to trace out the signature of the combination system.

3 - Fadings present on the two channels with equal phase. The result of such a measurement is represented in fig 9.

In zone 1 of this figure the minimum of $BER_n$ ($\phi$) that maximises the power is an absolute minimum, while in zone 2 such a minimum is a relative minimum detrimental for radio linkage purposes.

Zone 3, which represents an out of order area of the system, is a zone where there is no minimum of $BER_n$ ($\phi$) for combination purposes which is better than the one which maximises the power, does not exist since the depth $B_c$ of the notches present on the two channels is not considerably different.

Zone 4 is a zone in which optimizing $BER_n$ ($\phi$) through a sufficiently developed radiant method allows to recombine without any problem.

The high lighted problems arise for some $BER_n$ ($\phi$)'s while for others they do not exist, but it should be noted that the solution of such problems is very important to ensure the correct operation of the combiner in dynamic condition, i.e. with the parameters of selective fading present on MAIN and DIV channels varying dynamically and hence resulting in the rapid succession of different $BER_n$ ($\phi$)'s that must be each optimized in real time.

It is to point out that in Italian patent application MI92A001269 and Italian patent IT 1259032, corresponding to EP 0.572.859 (abandoned) and EP 0.575.746 (pending), respectively, implementations and improved applications of the method in question are disclosed. The subject matter described in the above-mentioned patent application and registration is considered incorporated herein.

**Claims**

1. Method for processing and optimizing the IF analog BER function of at least two signals in a digital radio transmission system, such signals being received in condition of diversity, in particular space and/or angle diversity, comprising the steps of: a) measuring power and dispersion of the recombined data spectrum, b) calculating an estimated BER from the power and dispersion thus measured using an analog BER function having predetermined power and dispersion coefficients and c) determining whether the thus calculated estimated BER varies by at least a predetermined amount in response to a change in the relative phase of the at least two input signals, **characterized in that** the radio link is optimized by searching a minimum of the analog BER function ($BER_n$ ($\phi$), by analysing said minimum individuating if it is relative minimum detrimental for linkage purposes until arriving at the absolute minimum which realises with certainty the best conditions for the link itself.

2. Method according to claim 1, **characterized in that** a minimum of the BER (minimum BER) is individuated, it is stored, at least one unbalance of the channel attenuators is carried out, the shape of the BER under the effect of said unbalances and in absence of improvement is controlled, the absolute minimum determining the optimization of the link is decided to have been found.

3. Method according to claim 2, **characterized in that** a first unbalance is carried out, the existence of a relative improvement is controlled, and a relative minimum is decided to have been found.

4. Method according to claim 3, wherein the unbalance is carried out twice, in a first direction and in the opposite one.

5. Method according to claim 1, **characterized in that** when searching the minimum and before its individuation a situation takes place in which the BER value does not change considerably as the combina-

tion phase $\phi$ changes and therefore it does not allow to realise the best radio link, **in that** one proceeds to analyse the variation as a function of $\phi$ of at least a substitutive one of the function BER=A*Rag ($\phi$) + B*Ban ($\phi$).

6. Method according to claim 5, **characterized in that** said substitutive function is individuated by operating according to the following steps:

   - classifying (90) an absolute or relative minimum;
   - storing (91) the value of the minimum of $BER_n$ ($\phi$, T1, T2) obtained by optimizing the phase with attenuators T1, T2 equal to respective nominal values $T1_n$, $T2_n$;
   - unbalancing (92) in one direction the attenuation level of the two channels so that the attenuation values after such unbalance will be $T1_a$ = $T1_n$+delta and $T2_a$ = $T2_n$-delta;
   - comparing (93) the value of $BER_n$ ($T1_n$, $T2_n$), stored in the storing step (91), with the value of $BER_n$ ($T1_a$, $T2_a$) obtained by carrying out the unbalancing step (92) to check if an improvement of $BER_n$ (T1, T2) has occurred;
   - unbalancing (94) the attenuation level of the two channels in a direction opposite to the previous unbalancing step (92) so that the attenuation values after such unbalance will be $T1_b$ = $T1_n$ - delta and $T2_b$ = $T2_n$ + delta;
   - comparing (95) the values of $BER_n$ ($T1_n$, $T2_n$), stored in the storing step (91), with the value of $BER_n$ ($T1_b$, $T2_b$) obtained by carrying out the last unbalancing step (94) in order to check if an improvement of $BER_n$ (T1, T2) has occurred;
   - if both the comparing tests (93 and 95) have not been successful, it can be asserted (96) that the minimum individuated for $BER_n$ ($\phi$) is an absolute minimum; or
   - if at least one of the comparing tests (93 and 95) has been successful, it can be asserted (97) that the minimum individuated for $BER_n$ ($\phi$) is a relative minimum.

**Patentansprüche**

1. Verfahren zum Verarbeiten und Optimieren der analogen ZF-Bitfehlerratefunktion (BER-Funktion) von wenigstens zwei Signalen in einem digitalen Funkübertragssystem, wobei die Signale in einem Diversity-Zustand, insbesondere Raum- und/oder Winkel-Diversity, empfangen werden, mit den Schritten:

   a) Messen der Leistung und Dispersion des rekombinierten Datenspektrums,

b) Berechnen einer geschätzten Bitfehlerrate BER aus der so gemessenen Leistung und Dispersion unter Verwendung einer analogen Bitfehlerratefunktion mit vorgegebenen Leistungs- und Dispersionskoeffizienten und

c) Bestimmen, ob die so geschätzte BER in Reaktion auf eine Änderung der relativen Phase der wenigstens zwei Eingangssignale um wenigstens einen vorgegebenen Betrag variiert,

**dadurch gekennzeichnet, dass** die Funkverbindung optimiert wird durch Suchen eines Minimums der analogen Bitfehlerratefunktion (BERn($\phi$)) durch Analysieren des Minimums durch Identifizieren, ob es ein für Verbindungszwecke abträgliches relatives Minimum ist, bis das absolute Minimum erreicht ist, das mit Sicherheit die besten Bedingungen für die Verbindung selbst realisiert.

2. Verfahren nach Anspruch 1, **dadurch gekennzeichnet, dass** ein Minimum der BER (BER-Minimum) identifiziert wird, gespeichert wird, wenigstens eine Gleichgewichtsverschiebung der Kanaldämpfer durchgeführt wird, die Form der BER unter der Wirkung dieser Gleichgewichtsverschiebungen und in Abwesenheit einer Verbesserung kontrolliert wird und entschieden wird, dass das absolute Minimum, das die Optimierung der Verbindung bestimmt, gefunden worden ist.

3. Verfahren nach Anspruch 2, **dadurch gekennzeichnet, dass** eine erste Gleichgewichtsverschiebung durchgeführt wird, die Existenz einer relativen Verbesserung kontrolliert wird und entschieden wird, dass ein relatives Minimum gefunden worden ist.

4. Verfahren nach Anspruch 3, wobei die Gleichgewichtsverschiebung zweimal durchgeführt wird, in einer ersten Richtung und in der entgegengesetzten Richtung.

5. Verfahren nach Anspruch 1, **dadurch gekennzeichnet, dass** wenn beim Suchen des Minimums und vor dessen Identifizierung eine Situation auftritt, in der der BER-Wert sich nicht wesentlich ändert, wenn sich die Kombinationsphase $\phi$ ändert, und deshalb die beste Funkverbindung nicht realisiert werden kann, die Veränderung in Funktion von $\phi$ wenigstens einer Ersatzfunktion für die Funktion BER=A*Rag($\phi$)+B*Ban($\phi$) analysiert wird.

6. Verfahren nach Anspruch 5, **dadurch gekennzeichnet, dass** die Ersatzfunktion identifiziert wird durch Vorgehen nach den folgenden Schritten:

- Klassifizieren (90) eines absoluten oder relativen Minimums;

- Speichern (91) des Werts des Minimums von $BER_n(\phi,T1,T2)$, der durch Optimieren der Phase mit Dämpfern T1, T2 jeweils gleich Nennwerten $T1_n$, $T2_n$ erhalten wird;

- Gleichgewichtsverschieben (92) des Dämpfungspegels der zwei Kanäle in einer Richtung, so dass die Dämpfungswerte nach Gleichgewichtsverschiebung $T1_a=T1_n+delta$ und $T2_a=T2_n-delta$ sind;

- Vergleichen (93) des Werts $BER_n(T1_n,T2_n)$, der im Speicherschritt (91) gespeichert wurde, mit dem durch Durchführen des Gleichgewichtsverschiebungsschritts (92) erhaltenen Wert von $BER_n(T1_a,T2_a)$, um zu überprüfen, ob eine Verbesserung von $BER_n(T1,T2)$ aufgetreten ist;

- Gleichgewichtsverschieben (94) des Dämpfungspegels der zwei Kanäle in einer zum vorhergehenden Gleichgewichtsverschiebungsschritt (92) entgegengesetzten Richtung, so dass die Dämpfungswerte nach einer solchen Gleichgewichtsverschiebung $T1_b=T1_n-delta$ und $T2_b=T2_n+delta$ sind;

- Vergleichen (95) der im Speicherschritt (91) gespeicherten Werte von $BER_n(T1_n,T2_n)$ mit dem durch Durchführen des letzten Gleichgewichtsverschiebungsschritts (94) erhaltenen Wert von $BER_n(T1_b,T2_b)$, um zu überprüfen, ob eine Verbesserung von $BER_n(T1,T2)$ stattgefunden hat;

- wenn beide Vergleichsschritte (93 und 95) erfolglos geblieben sind, kann bestätigt werden (96), dass das für $BER_n(\phi)$ identifizierte Minimum ein absolutes Minimum ist; oder

- wenn wenigstens einer der Vergleichstests (93 und 95) erfolgreich gewesen ist, kann bestätigt werden (97), dass das für $BER_n(\phi)$ identifizierte Minimum ein relatives Minimum ist.

## Revendications

1. Procédé de traitement et d'optimisation de la fonction de BER analogique en IF au moins de deux signaux dans un système de transmission radio numérique, ces signaux étant reçus dans une condition de diversité, en particulier une diversité d'espace et/ou d'angle, comprenant les étapes consistant à a) mesurer la puissance et la dispersion du spectre de données recombiné, b) calculer un BER estimé à partir de la puissance et de la dispersion ainsi mesurée en utilisant une fonction de BER analogique ayant des coefficients de puissance et de dispersion prédéterminés, et c) déterminer si le BER estimé ainsi calculé varie au moins d'une quantité prédéterminée en réponse à une variation de la phase relative des au moins deux signaux d'entrée, **caractérisé en ce que** la liaison radio est optimisée par la recherche d'un minimum de la fonction BER analogique ($BER_n(\phi)$), par l'analyse dudit minimum pour l'individualiser s'il s'agit d'un minimum relatif néfaste à la liaison jusqu'à atteindre le minimum absolu correspondant avec certitude aux meilleures conditions pour la liaison elle-même.

2. Procédé selon la revendication 1, **caractérisé en ce qu'**un minimum du BER (BER minimum) est individualisé, il est stocké, au moins un déséquilibre des atténuateurs de canaux est effectué, la forme du BER sous l'effet desdits déséquilibres et en l'absence d'amélioration est contrôlée, le minimum absolu déterminant l'optimisation de la liaison est décidé avoir été trouvé.

3. Procédé selon la revendication 2, **caractérisé en ce qu'**un premier déséquilibre est effectué, l'existence d'une amélioration relative est contrôlée et un minimum relatif est décidé avoir été trouvé.

4. Procédé selon la revendication 3, dans lequel le déséquilibre est effectué deux fois, dans une première direction et dans la direction opposée.

5. Procédé selon la revendication 1, **caractérisé en ce que** lors de la recherche du minimum et avant son individualisation, une situation se produit dans laquelle la valeur du BER ne change pas considérablement lorsque la phase de combinaison $\phi$ varie et en conséquence ne permet pas de réaliser la meilleure liaison radio, **en ce que** l'on effectue l'analyse de la variation en fonction de $\phi$ au moins d'un remplaçant de la fonction BER = $A*Rag(\phi)$ + $B* Ban(\phi)$.

6. Procédé selon la revendication 5, **caractérisé en ce que** ladite fonction de remplacement est individualisée en exécutant les étapes suivantes :

- classification (90) d'un minimum absolu ou relatif ;
- stockage (91) de la valeur du minimum de $BER_n(\phi,T1,T2)$ obtenu par optimisation de la phase avec des atténuateurs T1, T2 égaux aux valeurs nominales respectives $T1_n$, $T2_n$ ;
- déséquilibre (92) dans une direction du niveau d'atténuation des deux canaux de façon que les valeurs d'atténuation après ce déséquilibre soient $T1_a = T1_n + delta$ et $T2_a = T2_n - delta$ ;

- comparaison (93) de la valeur de $BER_n(T1_n, T2_n)$ stockée à l'étape de stockage (91) à la valeur de $BER_n(T1_a,T2_a)$ obtenue en exécutant l'étape de déséquilibre (92) pour vérifier si une amélioration de $BER_n(T1,T2)$ s'est produite ;
- déséquilibre (94) du niveau d'atténuation des deux canaux dans une direction opposée à l'étape de déséquilibre précédente (92) de façon que les valeurs d'atténuation après ce déséquilibre soient $T1_b = T1_n - delta$ et $T2_b = T2_n + delta$ ;
- comparaison (95) des valeurs de $BER_n(T1_n, T2_n)$ stockées à l'étape de stockage (91) à la valeur de $BER_n(T1_b,T2_b)$ obtenue en exécutant la dernière étape de déséquilibre (94) pour vérifier si une amélioration de $BER_n(T1,T2)$ s'est produite ;
- si les deux tests de comparaison (93 et 95) n'ont pas réussi, on peut affirmer (96) que le minimum individualisé pour $BER_n(\phi)$ est un minimum absolu ; ou
- si au moins l'un des tests de comparaison (93 et 95) a réussi, on peut affirmer (97) que le minimum individualisé pour $BER_n(\phi)$ est un minimum relatif.

DIV

MAIN

8 I 1

10 τ

12 +

13 ▷

9 I 2

11 Φ

14

15 ▽

16 C A G

17 DISPERSION MEASUREMENT NETWORK

23 D/AC

22 D/AC

21 D/AC

20 µP

19 A/DC

18 A/DC

FIG.1

FIG.2

FIG.3*a*

FIG.3b

Optimization of $BER_n(\emptyset)$ — 73

A shift of $\emptyset$ is carried out — 74

Updating of $BER_n(\emptyset), BER1_n(\emptyset), BER2_n(\emptyset)$ — 75

$Funz(\emptyset) \cdot BER_n(\emptyset)$ — 76

is $|Funz(\emptyset) - Funzrifb|$ less than $Difb$ ? — 77 — yes

n1 shifts of $\emptyset$ carried out — 79 — yes

is $Bon_n(\emptyset)$ worsened ? — 80 — yes

$Funzrifb \cdot Funz(\emptyset)$ — 78

is $|Funz(\emptyset) - Funzrifr|$ less than $Difr$ ? — 82 — yes

$Funz(\emptyset) \cdot BER1_n(\emptyset)$ — 81

n2 shifts of $\emptyset$ carried out — 84 — yes

$Funzrifr \cdot Funz(\emptyset)$ — 83

$Funz(\emptyset) \cdot BER2_n(\emptyset)$ — 85

Direction of shift inverted if $Funz(\emptyset)$ worsened — 86

FIG.4

13

Optimization of $BER_n(\emptyset)$ /73

A shift of $\emptyset$ is carried out /74

Updating of $BER_n(\emptyset)$, $BER1_n(\emptyset)$, $BER2_n(\emptyset)$ /75

$Funz(\emptyset) \cdot BER_n(\emptyset)$ /76

is $|Funz(\emptyset)-Funzrifb|$ less than Difb ? /77 — yes

nl shift of $\emptyset$ carried out /79 — yes

$Funzrifb \cdot Funz(\emptyset)$ /78

is $Ban_n(\emptyset)$ worsened ? /80 — yes

is $|Funz(\emptyset)-Funzrifr|$ less than Difr ? /82 — yes

$Funz(\emptyset) \cdot BER1_n(\emptyset)$ /81

n2 shifts of $\emptyset$ carried out /84 — yes

$Funzrifr \cdot Funz(\emptyset)$ /83

$Funz(\emptyset) \cdot BER2_n(\emptyset)$ /85

Is a minimum for $BER_n(\emptyset)$ /87 — yes

is $Ban_n(\emptyset)$ greater than DL ? /88 — yes

A shift of $\emptyset$ is carried out to come out of the minimum /89

Is an absolute minimum ? /90 — yes

Direction of shift inverted if Funz ($\emptyset$) worsened /86

FIG. 5

14

FIG.6

FIG.7a

FIG.7b

FIG.7c

FIG.7d

FIG.7e

$$\text{Classification of an absolute or relative minimum} \quad 90$$

$$\text{Storage} \quad BER_n(T1n, T2n) \quad 91$$

1st unbalancing in one direction...

$$T1a = T1n \cdot delta$$
$$T2a = T2n \cdot delta \quad 92$$

1st comparison of BER

is $BER_n(T1a, T2a)$ better than $BER_n(T1n, T2n)$? — yes — 93

2nd unbalancing in one direction

$$T1b = T1n \cdot delta$$
$$T2b = T2n \cdot delta \quad 94$$

2nd comparation of BER

is $BER_n(T1b, T2b)$ better than $BER_n(T1n, T2n)$? — yes — 95

We are in presence of an absolute minimum 96

We are in presence of a relative minimum 97

END

END

FIG. 8

16

FIG.9